(19) Europäisches Patentamt / European Patent Office / Office européen des brevets

(11) **EP 3 086 159 B1**

(12) **EUROPEAN PATENT SPECIFICATION**

(45) Date of publication and mention of the grant of the patent:
**19.04.2023 Bulletin 2023/16**

(21) Application number: **13899686.3**

(22) Date of filing: **17.12.2013**

(51) International Patent Classification (IPC):
**G02B 27/01** (2006.01)  **G02B 5/30** (2006.01)

(52) Cooperative Patent Classification (CPC):
**G02B 5/30; G02B 27/0172;** G02B 2027/0118;
G02B 2027/0123

(86) International application number:
**PCT/JP2013/083764**

(87) International publication number:
**WO 2015/092867 (25.06.2015 Gazette 2015/25)**

(54) **VIRTUAL-IMAGE GENERATION ELEMENT AND HEADS-UP DISPLAY**

VIRTUELLE BILDERZEUGUNGSVORRICHTUNG UND HEAD-UP-ANZEIGE

ELÉMENT GÉNÉRATEUR D'IMAGES VIRTUELLES ET AFFICHEUR TÊTE HAUTE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**26.10.2016 Bulletin 2016/43**

(73) Proprietor: **Pioneer Corporation Tokyo 113-0021 (JP)**

(72) Inventor: **YANAGISAWA, Takuma Kawasaki-shi Kanagawa 212-0031 (JP)**

(74) Representative: **Viering, Jentschura & Partner mbB Patent- und Rechtsanwälte Am Brauhaus 8 01099 Dresden (DE)**

(56) References cited:
WO-A1-2011/078055    JP-A- H01 126 620
JP-A- H02 132 411    JP-A- H03 186 489
JP-A- H08 122 694    JP-B1- 4 928 014
US-A- 6 075 651    US-A- 6 144 439
US-A1- 2010 110 368

• H A Macleod: "Thin-Film Optical Filters" In: "Thin-Film Optical Filters", 1 January 2001 (2001-01-01), IOP Publishing Ltd, Bristol and Philadelphia, XP055389083, ISBN: 978-0-7503-0688-1 pages 5-9, * page 7 - page 186; figures 2.4, 5.6 * & H A Macleod: "Thin-Film Optical Filters" In: "Thin-Film Optical Filters", 1 January 2001 (2001-01-01), IOP Publishing Ltd, Bristol and Philadelphia, XP055388903, ISBN: 978-0-7503-0688-1 pages 18-37, & H A Macleod: "Thin-Film Optical Filters" In: "Thin-Film Optical Filters", 1 January 2001 (2001-01-01), IOP Publishing Ltd, Bristol and Philadelphia, XP055388907, ISBN: 978-0-7503-0688-1 pages 184-204,

**Description**

Technical Field

The present invention relates to a technical field of visualizing images as virtual images.

BACKGROUND TECHNIQUE

Conventionally, a display device such as a head-up display (hereinafter referred to as "HUD") which visualizes images as virtual images is known (for example, Patent References 1 and 2) . Normally, by the HUD, real images formed by a real image display device (i.e., images on each kind of display or images projected on a screen by a projector) is recognized by a driver as virtual images by the use of a half mirror, called as a combiner, disposed ahead of a visual field of the driver. Thus, the driver can visually recognize meters, navigation information and the like, in a manner superimposed on a front view, while keeping his or her visual line ahead without dropping the visual line. Patent Reference 3 discloses techniques for visualizing a virtual image by an optical collimation device configured of a flat mirror having a wavelength selectivity and a concave half mirror.

PRIOR ART REFERENCES

PATENT REFERENCES

   Patent Reference 1: Japanese Patent Application Laid-open under No. 06-270716
   Patent Reference 2: Japanese Patent Application Laid-open under No. 2002-052953
   Patent Reference 3: Japanese Patent No. 2905486

US 6 144 439 A discloses that a collimating apparatus includes a meniscus lens having a reflective concave surface; a cholesteric liquid crystal (CLC), aligned on an axis common with the meniscus lens, disposed on the concave side of the meniscus lens, positioned to reflect light onto the concave surface and having a tilt making the normal of the CLC different from the normal of the meniscus lens; and an image source, disposed on the convex side of the meniscus lens and having a tilt corresponding to the tilt of the CLC (cf. Abstract).
US 6075651A1 describes a display system used as collimating eyepiece utilizing a polarization selective optical element reflecting one linear polarization state while transmitting radiation of the orthogonal linear polarization, a quarter wave plate, and an optical element, wherein the optical element includes a partially reflective surface and includes an optical doublet.

Disclosure of Invention

PROBLEM TO BE SOLVED BY THE INVENTION

When the size of the combiner is fixed, the maximum viewing angle of the virtual image visually recognized by the driver depends on the distance between the combiner and the driver. Namely, the viewing angle becomes large when the combiner is near to the driver, and the viewing angle becomes small when the combiner is far from the driver. Therefore, in order to visualize as large a virtual image as possible, it is desired to position the combiner as close to the driver as possible . However, the combiner is frequently arranged on the dashboard in terms of the place where the combiner can be set (For example, see Patent Reference 1).
On the other hand, a HUD in which the combiner is mounted near the ceiling (i.e., near the sun visor) so as to enlarge the viewing angle has recently been proposed (For example, see Patent Reference 2). In this HUD, since the real image display device must be arranged on the driver side with respect to the combiner in order to make the reflected light of the real image incident upon eyes, basically it is also necessary to mount the real image display device on the ceiling. Therefore, there are such disadvantages that the driver feels a sense of oppression and that the power lines must be drawn to the ceiling, making the mounting work troublesome. Unfortunately, also in case of adopting the configuration described in Patent Reference 3, the luminance of the virtual image is heavily attenuated.
The above is an example of the problem to be solved by the present invention. It is an object of the present invention to provide a virtual image generation device capable of appropriately letting a user visually recognize a virtual image.

MEANS FOR SOLVING THE PROBLEM

The present invention provides a virtual image generation device according to claim 1. Further embodiments of the present invention are described in the dependent claims.

BRIEF DESCRIPTION OF THE DRAWINGS

FIG. 1 illustrates a basic configuration of a HUD.
FIG. 2 illustrates a configuration of a combiner according to a modification.
FIGS. 3A and 3B illustrate characteristics of a dielectric multilayer.
FIG. 4 illustrates a sectional view of the combiner in the case where the signal light enters the combiner from above with the same incident angle as the real image display light.
FIG. 5 illustrates a cross-sectional view of the combiner according to a comparison example in which a dielectric multilayer is provided instead of a cholesteric liquid crystal layer.
FIGS. 6 illustrate a configuration of a combiner according to a first modification.
FIG. 7 illustrates a configuration of a combiner according to a third modification.
FIG. 8 illustrates a configuration of a combiner according to an embodiment.
FIG. 9 illustrates the combiner with magnifying a broken line area in FIG. 8.
FIGS. 10A to 10C illustrate configurations of a combiner according to a seventh modification.
FIG. 11 illustrates a configuration of a combiner according to the embodiment and the second modification in combination.
FIG. 12 illustrates an example of a combiner shaped into helmet-shape.

DETAILED DESCRIPTION OF THE PREFERRED EMBODIMENTS

According to the present invention, a virtual image generation element constitutes a combiner according to independent claim 1. Thereby, the virtual image generation device appropriately lets an observer visually recognize the virtual image without projecting the real image display light directly onto the observer's eyes.
Other modes of the virtual image generation device constituting the combiner are defined in the dependent claims.

EMBODIMENT AND MODIFICATIONS THEREOF

A preferred embodiment and various modifications of the present invention will be explained hereinafter with reference to the drawings.

[Configuration of Head-up Display]

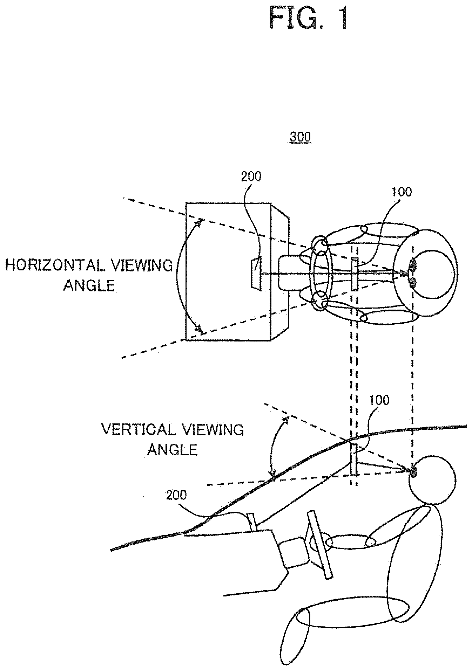

FIG. 1 illustrates a basic configuration of a HUD 100. As illustrated in FIG. 1, the HUD 100 according to the basic configuration has such a configuration that the real image display device 200 is provided on the dashboard and only the combiner 100 is provided around the ceiling (near the sun visor) . To properly achieve the above-mentioned configuration, the combiner 100 that is a transmission-type combiner transmitting the light of the real image is adopted instead of a reflection-type combiner reflecting the light of the real image. Concretely, the combiner 100 optically acts only on the light (hereinafter referred to as "real image display light") emitted from the real image display device 200 and refracts the real image display light. Thereby, the combiner 100 leads the real image display light to the driver's head and minimizes the optical effect on the light (e.g., light corresponding to the front scenery in front of the vehicle, referred to as "background light") other than the real image display light thereby to transmit the background light as much as possible.
The HUD 300 enables the driver to have a wide field of view with respect to the virtual image. Additionally, compared to such a configuration that the real image display device 200 is provided on the ceiling, the HUD 300 gives less oppressive feeling to the driver and is easier to install because there is no need to deliver an electric power to the ceiling.
The present invention is not limited to the example illustrated in FIG. 1 in which the real image display device 200 is mounted on the dashboard, and the real image display device 200 may be provided on an instrument panel or a center console. Namely, the present invention is not limited to configure the real image display device in an on-dash type, and the real image display device may be configured in an in-dash type.

The combiner 100 corresponds to an example of "a virtual image generation device" of the present invention, and the real image display device 200 corresponds to an example of "an external device" of the present invention.

Next, specific examples of the above combiner 100 will be described below. Hereinafter, as an example, it is assumed that the real image display device 200 emits the real image display light configured of the three primary colors (RGB).

[Configuration of Combiner]

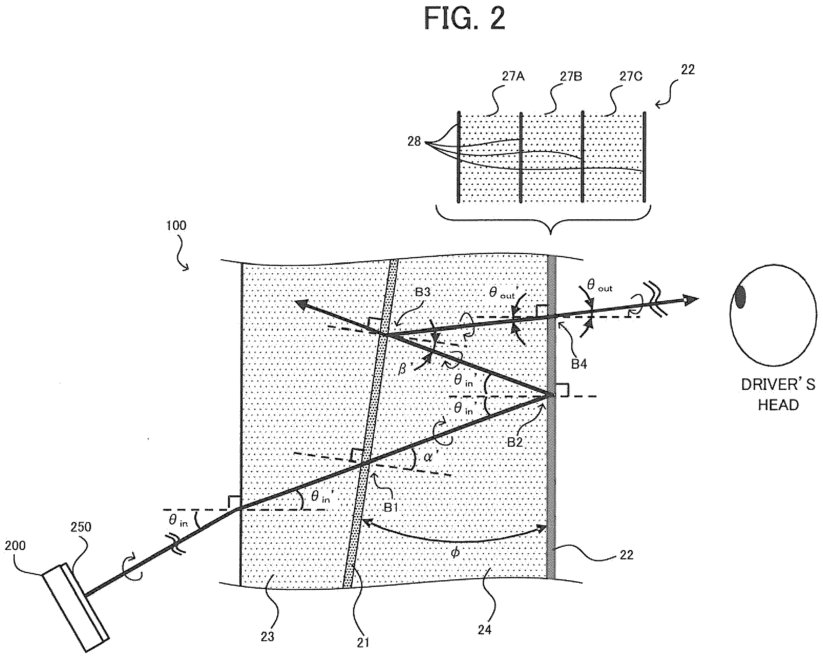

FIG. 2 is a diagram illustrating a configuration of the combiner 100. FIG. 2 illustrates a sectional view of a part of the combiner 100 cut along a traveling direction of the light (the real image displaying light) emitted from the real image display device 200. It is true of the following figures of the combiners.

As shown in FIG. 2, the combiner 100 includes a transparent base plate 23, a dielectric multilayer 21, a transparent base plate 24 and a cholesteric liquid crystal layer 22 in the order from the side which the real image display light enters.

As reflection characteristics, the dielectric multilayer 21 has a wavelength selectivity to selectively reflect the light of the same wavelength as the real image display light and an incident angle dependency to change the reflectivity depending on the incident angle. Additionally, as mentioned below, the dielectric multilayer 21 is configured so that the peak (maximum value) of the reflectivity is approximately 50%. Thereby, as illustrated in FIG. 2, the dielectric multilayer 21 transmits the light whose incident angle is a predetermined angle "$\alpha$'", and reflects a part of the incident light which is reflected by the cholesteric liquid crystal layer 22 and whose incident angle is a predetermined angle "$\beta$'" . The dielectric multilayer 21 is an example of "a first optical element" according to the present invention.

The cholesteric liquid crystal layer 22 has a wavelength selectivity and a circular dichroism as reflection characteristics. Specifically, as illustrated in FIG. 2, the cholesteric liquid crystal layer 22 has such a configuration that the cholesteric liquid crystals 27A to 27C each of which has a helical structure with a different helical pitch are separated into three layers by the glass base plates 28. Each of the cholesteric liquid crystals 27A to 27C selectively reflects a circularly polarized light component which has the same polarization direction as the twisted direction of the helix and which has the same wavelength as the helical pitch. In this modification, the cholesteric liquid crystals 27A to 27C have the helical pitches with the same lengths as the wavelength (650 nm) of the red light (R), the wavelength (532 nm) of the green light (G) and the wavelength (450 nm) of the blue light (B), respectively, and selectively reflect right-handed circularly polarized light. Thereby, as illustrated in FIG. 2, the cholesteric liquid crystal layer 22 reflects 100% of the right-handed circularly polarized light with a predetermined incident angle "$\theta_{in}$'", and thereafter transmits 100% of the left-handed circularly polarized light with a predetermined incident angle "$\theta_{out}$'" that is the light reflected by the dielectric multilayer 21. The cholesteric liquid crystal layer 22 is an example of "a second optical element" according to the present invention.

Technically, the wavelength of the light reflected by the cholesteric liquid crystal layer 22 is expressed by "p $\times$ n $\times$ cos$\theta$" wherein "p" indicates the helical pitches of the cholesteric liquid crystal layer 22, "$\lambda$" indicates the wavelength of the real image display light, "$\theta$" indicates the incident angle, "n" indicates the average refractive index of the cholesteric liquid crystal layer 22. Thus, it is preferable to determine the helical pitches of the cholesteric liquid crystal layer 22 in consideration of the above relationship so that the cholesteric liquid crystal layer 22 reflects the real image display light.

Additionally, the dielectric multilayer 21 and the cholesteric liquid crystal layer 22 in the combiner 100 are arranged to be non-parallel with each other. Specifically, the cholesteric liquid crystal layer 22 is arranged along the horizontal plane in the combiner 100, and the dielectric multilayer 21 is arranged to be inclined by the angle $\varphi$ with respect to the horizontal plane in the combiner 100. Namely, the dielectric multilayer 21 and the cholesteric liquid crystal layer 22 define the angle "$\varphi$".

Furthermore, on the light emitting face of the real image display device 200, there is provided the quarter wave plate film 250. In such a configuration, the linearly polarizedlight emitted from the light emitting face of the real image display device 200 is converted into the right-handed circularly polarized light by the quarter wave plate film 250 and enters the combiner 100.

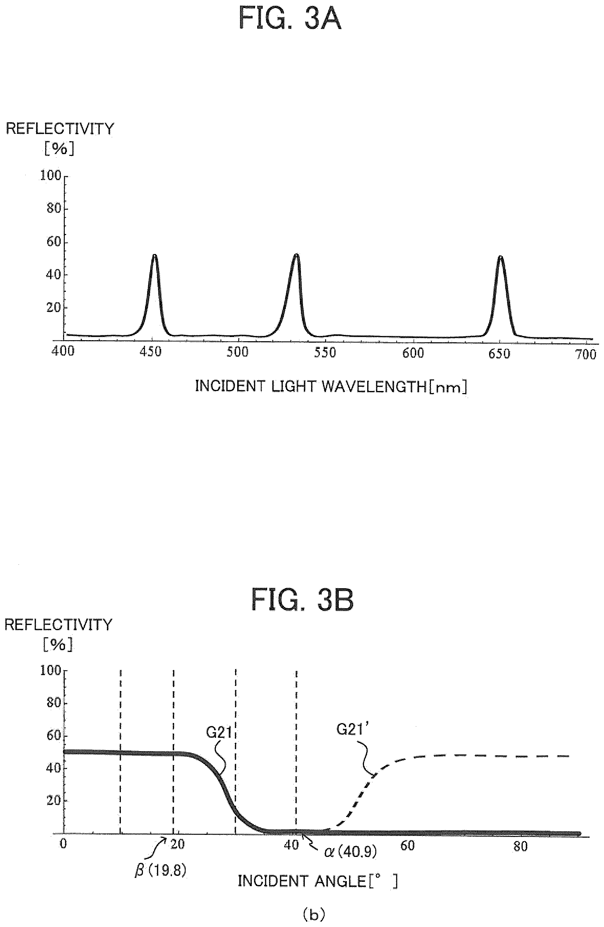

Next, with reference to FIGS. 3A and 3B, description will be given of the characteristics that the dielectric multilayer 21 needs to have, in order to realize the above-described optical effect of the dielectric multilayer 21.

FIG. 3A illustrates wavelength-selective reflection characteristic of the dielectric multilayer 21, wherein the horizontal axis indicates an incident wavelength [nm] and the vertical axis indicates reflectivity [%] . Specifically, FIG. 3A illustrates the wavelength-dependence of the reflectivity with respect to the light entering the dielectric multilayer 21 with the incident angle $\beta$ ($\beta$' inside the base plate) . As shown in FIG. 3A, the dielectric multilayer 21 is configured to give the optical effect (specifically, the regular reflection effect with 50% reflectivity) only to the real image displaying light (i.e., the light of the wavelength at or near 450nm, 532nm, 650nm) configured of the RGB light. Thus, the light of the wavelength other than the above-mentioned three wavelengths does not receive the optical effect by the dielectric multilayer 21.

FIG. 3B illustrates incident angle dependencies of reflectivity of the dielectric multilayer 21 with respect to the real image displaying light, wherein the horizontal axis indicates an incident angle [°] (this incident angle indicates the angle converted to the interface reflection with the air) and the vertical axis indicates reflectivity [%] . Specifically, the graph G21 of the solid line indicates the incident angle dependence of the dielectric multilayer 21. It is noted that FIG. 3B illustrates the example wherein the angle $\alpha$ is 40.9 [°] and the angle $\beta$ is 19.8 [°] .

As illustrated by the graph G21, the dielectric multilayer 21 is configured to firstly transmit approximately 100% of the real image display light with the incident angle $\alpha$ and thereafter to reflect approximately 50% of the real image display light which is reflected by the cholesteric liquid crystal layer 22 and which is incident thereafter on the dielectric multilayer 21 with the incident angle $\beta$. It is noted that if the dielectric multilayer 21 has the characteristic of transmitting the real image display light of the incident angle $\alpha$ and reflecting the real image display light of the incident angle $\beta$, it may have any characteristic at other angles. For example, the dielectric multilayer 21 may have the characteristic illustrated by the broken-line graph G21'.

[Detail of Optical Effect]

The combiner 100 includes the dielectric multilayer 21 and the cholesteric liquid crystal layer 22 equipped with the circular dichroism, wherein the dielectric multilayer 21 has the wavelength selectivity and the incident angle dependency and wherein the maximum reflectivity thereof is approximately 50%. Thereby, the combiner 100 lets the driver visually recognize the image while suppressing the attenuation rate of the real display light to approximately 50% and also lets the driver visually recognize the light emitted from traffic signals with the same wavelength as the real image display light.

Hereinafter, each description will be given of the optical effect on the real image display light and the optical effect on the light (referred to as "signal light") emitted from traffic signals with the same wavelength as the real image display light, respectively.

(1) Optical Effect on Real Image Display Light

As illustrated by arrows B1 to B4 in FIG. 2, the dielectric multilayer 21 and the cholesteric liquid crystal layer 22 gives predetermined optical effects to the real image display light entering the combiner 100 with the incident angle $\theta_{in}$ from below thereby to let the real image display light pass through the combiner 100 with the exit angle $\theta_{out}$ ($\theta_{out} \neq \theta_{in}$) and lead the real image display light to the driver's head while keeping approximately 50% of the light intensity.

Specifically, the real image display light converted into the right-handed circularly polarized light by the quarter wave plate film 250 enters the combiner 100 with the incident angle $\theta_{in}$. Thereafter, the real image display light is refracted by the base plate 23 to have the angle $\theta_{in}$' and enters the dielectric multilayer 21 with the incident angle $\alpha'$ . Since the reflectivity of the dielectric multilayer 21 with respect to the light of the incident angle $\alpha$ ($\alpha'$ inside the base plate) is approximately 0% (see FIGS. 3A and 3B), the dielectric multilayer 21 transmits 100% of the incident light to have the exit angle $\alpha'$ that is the same angle as the incident angle as indicated by the arrow B1 while maintaining the right-handed polarized incident light intact.

Thereafter, the light transmitted from the dielectric multilayer 21 enters the cholesteric liquid crystal layer 22 with the incident angle $\theta_{in}$'. The above incident light has the same wavelength as one of the helical pitches of the cholesteric liquid crystals 27A to 27C and forms the circularly polarized light having the same polarization direction as the twisted direction (right-handed direction) of the helix. Thus, as indicated by the arrow B2, the cholesteric liquid crystal layer 22 regularly reflects the incident light by approximately 100% reflectivity with the reflection angle $\theta_{in}$' . In this way, by reflecting approximately 100 % of the above incident light, the cholesteric liquid crystal layer 22 preferably suppresses the light of the real image displayed by the real image display device 200 from directly entering the driver' s eyes. In this case, the cholesteric liquid crystal layer 22 reflects the incident light that is right-handed circularly polarized light as it is.

The right-handed circularly polarized light regularly reflected by the cholesteric liquid crystal layer 22 enters the dielectric multilayer 21 with the incident angle $\beta'$. Since the reflectivity of the dielectric multilayer 21 with respect to light of the incident angle $\beta$ ($\beta'$ inside the base plate) is approximately 50% (see FIGS. 3A and 3B), the dielectric multilayer 21 regularly reflects the above incident light by approximately 50% reflectivity as indicated by the arrow B3. In this case, the dielectric multilayer 21 reflects and converts the incident light that is right-handed circularly polarized light into left-handed circularly polarized light. Thereafter, the left-handed circularly polarized light reflected by the dielectric multilayer 21 enters the cholesteric liquid crystal layer 22 with the incident angle $\theta_{out}$'. Since the above incident light is left-handed circularly polarized light which rotates in the opposite direction to the twisted direction (right-handed direction) of the helix of the cholesteric liquid crystals 27A to 27C, the above incident light passes through the cholesteric liquid crystal layer 22 with approximately 100 % transmittance and exits the combiner 100 with the exit angle $\theta_{out}$ as indicated by the arrow B4.

In this way, the combiner 100 can let the driver visually recognize the virtual image while suppressing the attenuation rate of the real image display light emitted from the real image display device 200 to approximately 50%.

Hereinafter, description will be given of the relationship between the incident angle $\theta_{in}$ and the exit angle $\theta_{out}$ of the real image display light and the inclination angle $\varphi$ of the dielectric multilayer 21.

The incident angle $\theta_{in}$ is determined based on the arrangement positions of the real image display device 200 and the combiner 100, and the exit angle $\theta_{out}$ is determined based on the positions of the head and the display position of the virtual image. The angles $\theta_{in}'$, $\theta_{out}'$ correspond to the angles $\theta_{in}$, $\theta_{out}$ inside the base plate, respectively, and are obtained from the equations (1) and (2) by the Snell's law.

$$\theta_{in}' = \sin^{-1} (\sin\theta_{in} / n) \qquad (1)$$

$$\theta_{out}' = \sin^{-1} (\sin\theta_{out} / n) \qquad (2)$$

Also, the above angles $\alpha'$, $\beta'$, $\varphi$ are expressed by the equations (3), (4), (5), respectively, by using the angles $\theta_{in}'$, $\theta_{out}'$.

$$\alpha' = (3\theta_{in}' - \theta_{out}')/2 \qquad (3)$$

$$\beta' = (\theta_{in}' + \theta_{out}')/2 \qquad (4)$$

$$\varphi = (\theta_{in}' - \theta_{out}')/2 \qquad (5)$$

Further, the angles $\alpha'$, $\beta'$ are converted to the angles $\alpha$, $\beta$ in the air by the Snell's law, as expressed by the equations (6), (7).

$$\alpha = \sin^{-1}(n \cdot \sin\alpha') \qquad (6)$$

$$\beta = \sin^{-1}(n \cdot \sin\beta') \qquad (7)$$

According to the example illustrated in FIG. 2, the angle $\theta_{in}$ is 30 [°] and the angle $\theta_{out}$ is 10 [°]. In this case, by substituting the angles $\theta_{in}'$, $\theta_{out}'$ obtained from the equations (1) and (2) into the equation (3), "$\alpha'$ =25.9 [°] "is obtained. "$\beta'$ =13.1 [°] "is also obtained by substituting the angles $\theta_{in}'$, $\theta_{out}'$ into the equation (4). Then, "$\alpha$ = 40.9 [°] "is obtained by substituting the angle $\alpha'$ into the equation (6), and "$\beta$ = 19.8 [°]"is obtained by substituting the angle $\beta'$ into the equation (7). Further, "$\varphi$ = 6.4 [°] "is obtained by substituting the angles $\theta_{in}'$, $\theta_{out}'$ into the equation (5). Therefore, in the above example, it is necessary to arrange the dielectric multilayer 21 to be inclined by 6.4 [°] with respect to the cholesteric liquid crystal layer 22.

In this way, by fixing the angles $\theta_{in}$, $\theta_{out}$, it is possible to uniquely determine the inclination angle $\varphi$ of the dielectric multilayer 21. It is noted that since the dielectric multilayer 21 and the cholesteric liquid crystal layer 22 regularly reflect the light (namely, the incident angle and the reflection angle become equal), the dielectric multilayer 21 is tilted with respect to the cholesteric liquid crystal layer 22 in order to achieve the optical function of outputting the light of the incident angle $\theta_{in}$ with the exit angle $\theta_{out}$ different from the incident angle $\theta_{in}$.

(2) Optical Effect on Signal Light

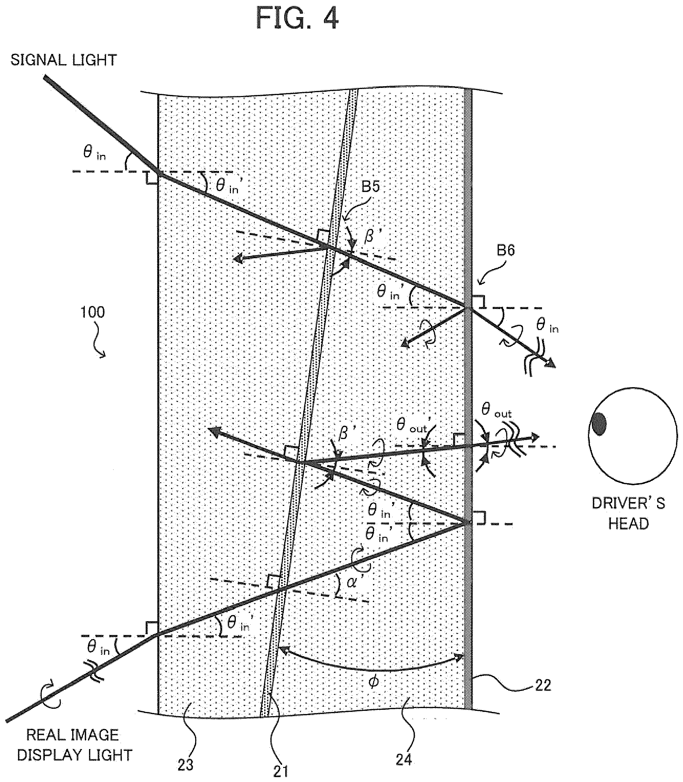

Next, description will be given of the optical effect to the signal light with reference to FIG. 4. FIG. 4 illustrates a sectional view of the combiner 100 in the case where the signal light enters the combiner 100 from above at the same incident angle $\theta_{in}$ as the real image display light.

As illustrated by arrows B5 and B6 in FIG. 4, the dielectric multilayer 21 and the cholesteric liquid crystal layer 22 give a predetermined optical effect to the signal light entering the combiner 100 at the incident angle $\theta_{in}$ from above

thereby to let the signal light pass through the combiner 100 at the exit angle $\theta_{in}$ and lead the signal light to the driver's head while keeping approximately 25% of the light intensity.

Specifically, the signal light in the random polarization state enters the combiner 100 at the incident angle $\theta_{in}$ and is refracted by the base plate 23 to have the angle $\theta_{in}$' and enters the dielectric multilayer 21 at the incident angle $\beta$' . Since the reflectivity of the dielectric multilayer 21 with respect to light of the incident angle $\beta$ ($\beta$' inside the base plate) is the peak reflectivity thereof (approximately 50%, see FIGS. 3A and 3B), the dielectric multilayer 21 transmits approximately 50% of the incident light with the exit angle $\beta$' that is the same angle as the incident angle as indicated by the arrow B5 while maintaining the incident light randomly polarized.

Thereafter, the light transmitted from the dielectric multilayer 21 enters the cholesteric liquid crystal layer 22 at the incident angle $\theta_{in}$'. The above incident light has the same wavelength as one of the helical pitches of the cholesteric liquid crystals 27A to 27C and is randomly polarized. Thus, in this case, as indicated by the arrow B6, the left-handed circularly polarized light corresponding to approximately 50 % of the above incident light passes through the cholesteric liquid crystal layer 22 and exits the combiner 100 at the exit angle $\theta_{in}$.

In this way, each of the dielectric multilayer 21 and the cholesteric liquid crystal layer 22 attenuate by approximately 50% the intensity of the signal light entering the combiner 100 from above at the same incident angle $\theta_{in}$ as the real image display light, and thereby let the driver visually recognize the display of the traffic signal with the light intensity of approximately 25%. Thus, the combiner 100 lets the driver visually recognize the virtual image while suppressing the attenuation rate of the real image display light emitted from the real image display device 200 to approximately 50%, and also leads the signal light entering the combiner 100 from above at the same incident angle $\theta_{in}$ as the real image display light to the driver's eyes.

It is noted that light emitted from traffic signals with a different wavelength from the real image display light is visually recognized by the driver almost without attenuation since the reflectivity of both of the dielectric multilayer 21 and the cholesteric liquid crystal layer 22 with respect to the light of the different wavelength is approximately 0% even if the light enters the combiner 100 at the same incident angle (i.e., angle $\theta_{in}$) as the real image display light.

Similarly, the signal light entering the combiner 100 at a different incident angle (i.e., any angle other than the angle $\theta_{in}$) from the real image display light is attenuated by approximately 50% only by the cholesteric liquid crystal layer 22 and visually recognized by the driver since the reflectivity with respect to the dielectric multilayer 21 is set to approximately 0% in this case.

[Effect]

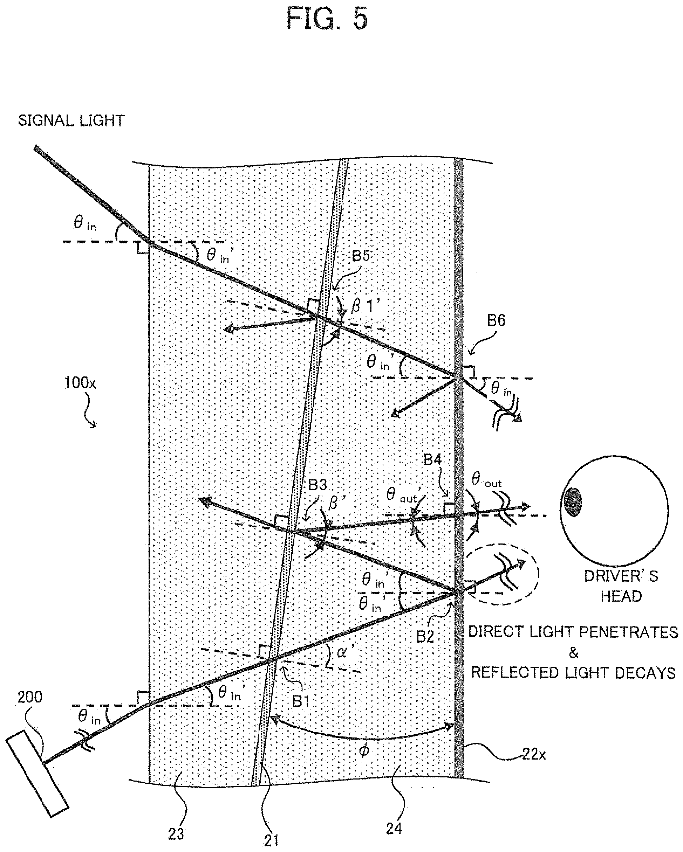

Next, the effect of the combiner 100 will be supplementarily explained with reference to FIG. 5.

FIG. 5 illustrates a cross-sectional view of the combiner 100x according to the comparison example in which the dielectric multilayer 22x is provided instead of the cholesteric liquid crystal layer22. It is assumed that the dielectric multilayer 22x reflects only light with substantially the same wavelength as the light of R, G, or B and has the characteristic of transmitting approximately 100% of the incident light with the incident angle $\theta_{out}$ ($\theta_{out}$' inside the base plate) and reflecting a maximum of approximately 50% of the incident light with the incident angle $\theta_{in}$ ($\theta_{in}$' inside the base plate) . In the comparison example, the quarter wave plate film 250 is not attached to the real image display device 200.

In the combiner 100x according to the comparison example illustrated in FIG. 5, the dielectric multilayer 21 transmits approximately 50 % of the signal light (light emitted from traffic signals with the same wavelength as the real image display light) which is incident from above at the angle $\theta_{in}$, and thereafter the dielectric multilayer 22x transmits approximately 50 % of the light of the incident angle $\theta_{in}$' . In this way, similarly to the combiner 100, the combiner 100x lets the driver visually recognize the signal display based on the signal light while keeping the light intensity equal to or higher than 25%.

Meanwhile, when the real image display light enters the combiner 100x at the incident angle $\theta_{in}$, the real image display light passing through the dielectric multilayer 21 by 100% transmittance is reflected by the dielectric multilayer 22x by approximately 50% reflectivity. As a result, in the case of the comparison example, only approximately 25% of the real image display light that is half in the case modifications reaches the driver's eyes and the virtual image visually recognized by the driver appears dark. Furthermore, in the case of the comparison example, since approximately 50% of the real image display light entering the dielectric multilayer 22x passes through the dielectric multilayer 22x, the real image display light passing through the dielectric multilayer 22x directly enters the driver's eyes. In this case, since the real image display light directly entering the driver's eyes has approximately 50% light intensity, the light intensity thereof becomes higher than the light intensity (approximately 25%) of the virtual image. This leads to deterioration of the visibility.

Description will be given of another comparison example in which each peak of the reflectivity of the dielectric multilayer 21 and the dielectric multilayer 22x according to the above comparison example is set to approximately 100%. In this case, while the real image display light does not directly enter the driver's eyes and the virtual image is kept bright, the signal light which is incident from above at the same incident angle $\theta_{in}$ as the real image display light is reflected by 100% reflectivity by bothof the dielectric multi layer 21 and the dielectricmultilayer 22x. Thus, in this case, the visibility of the signal display is seriously low.

Above things considered, the combiner 100 according to the modifications includes the dielectric multilayer 21, which has the wavelength selectivity and the incident angle dependency and whose maximum reflectivity is approximately 50%, and the cholesteric liquid crystal layer 22 having the circular dichroism. Thereby, the combiner 100 lets the driver visually recognize the virtual image while suppressing the attenuation rate of the real image display light to approximately 50%, and also leads the signal light with the same wavelength as the real image display light to the driver's eyes.

[Modifications]

Hereinafter, description will be given of the embodiment and preferred modifications according to the present invention. Each modification mentioned later can be applied to the embodiment in combination.

(First Modification)

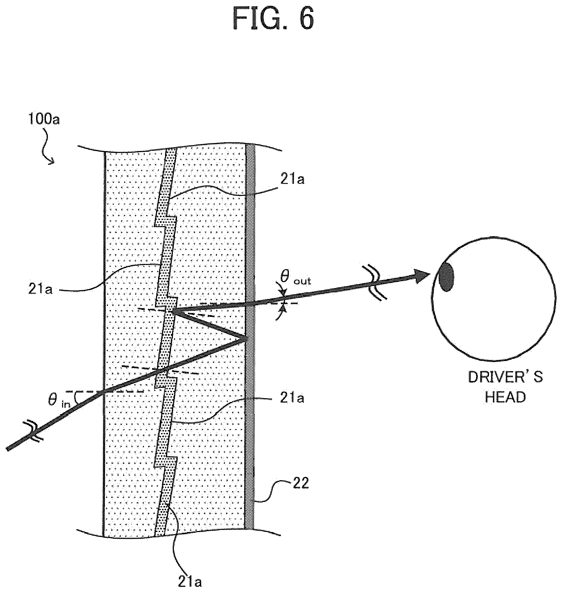

FIG. 6 is a diagram illustrating a configuration of a combiner 100a according to the first modification. As illustrated in FIG. 6, the combiner 100a is different from the combiner 100 in that it uses a dielectric multilayer 21a of a serrate shape, instead of the dielectric multi layer 21. The dielectric multilayer 21a has a plurality of inclined planes 21a, and thereby the same function as the above-described dielectric multilayer 21 may be realized. For example, the inclination of the inclined planes 21a of the dielectric multilayer 21a may be designed to the same inclination as the dielectric multilayer 21. Namely, the inclined planes 21a inclined by the angle $\varphi$ with respect to the cholesteric liquid crystal layer 22 may be applied.

According to the first modification, by using the dielectric multilayer 21a which itself is not inclined, instead of the dielectric multilayer 21 inclined in its entirety, the thickness of the combiner 100a can be made thinner than the thickness of the combiner 100 described above.

(Second Modification)

In the second modification, the above-described combiner 100 further has a lens effect as the optical effect given to the real image displaying light. For example, the combiner 100 has a focusing function and/or a diffusion function of the light. Such a combiner 100 may be realized by forming the dielectric multilayer 21 (the reflection plane existing inside the base plate) into a moderately curved surface. According to the second modification, the combiner 100 having a magnification can be realized, and the distance of the virtual image may be changed far or near.

It is noted that the first modification may be applied to the dielectric multilayer 21 formed with the moderately curved surface as described above. Namely, the dielectric multilayer 21 may be formed into the curved surface and into the serrate shape at the same time. In that case, the dielectric multilayer 21 is formed into a Fresnel lens shape.

(Third Modification)

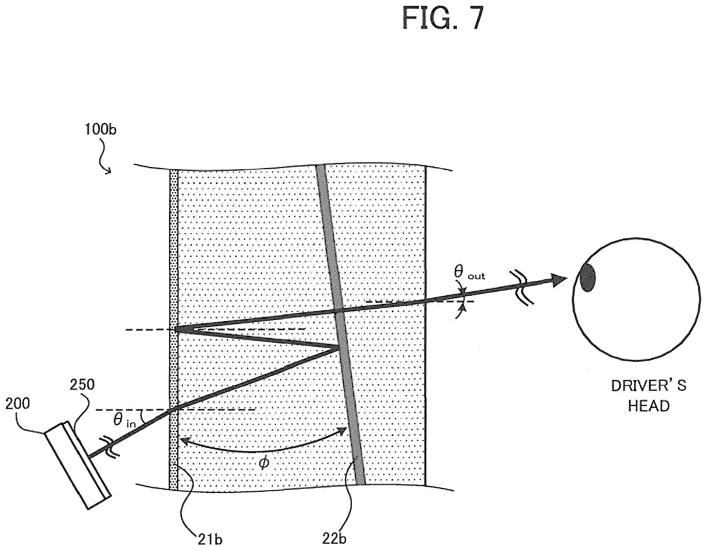

FIG. 7 is a diagram illustrating a configuration of a combiner 100b according to the third modification. As illustrated in FIG. 7, the combiner 100b according to the third modification is different from the combiner 100 according to other modifications in that the dielectric multilayer 21b corresponding to the dielectric multilayer 21 is formed on the surface of the combiner 100b and the cholesteric liquid crystal layer 22b corresponding to the cholesteric liquid crystal layer 22 is formed inside the combiner 100b. Specifically, in the combiner 100b, the dielectric multilayer 21b is arranged along the combiner 100b to function as the incident plane of the combiner 100b while the cholesteric liquid crystal layer 22b is arranged to be inclined by the angle $\varphi$ with respect to the combiner 100b and the dielectric multilayer 21b.

The third modification may be implemented in combination with the first modification and/or the second modification. Namely, the cholesteric liquid crystal layer 22b may be formed into the curved surface or the serrate shape. When the cholesteric liquid crystal layer 22b is formed into the curved surface and the serrate shape at the same time, the cholesteric liquid crystal layer 22b is formed into the Fresnel lens shape.

In another example, both the dielectric multilayer 21 and the cholesteric liquid crystal layer 22 may be formed inside the combiner 100. In that case, it is not limited that only one of the dielectric multilayer 21 and the cholesteric liquid crystal layer 22 is formed to be inclined with respect to the combiner 100, and both the dielectric multilayer 21 and the cholesteric liquid crystal layer 22 may be formed to be inclined with respect to the combiner 100.

(Fourth Modification)

In the fourth modification, a volume type HOE (Holographic Optical Element) is used instead of the dielectric multilayer 21. In that case, the volume type HOE needs to have the characteristic as illustrated in FIGS. 3A and 3B.

Additionally, the volume type HOE needs to be formed to give the regular reflection effect to the real image displaying light as the optical effect.

(Fifth Modification)

In the modifications described above, while the dielectric multilayer 21 is used as the wavelength selective transmission coatings or the wavelength selective reflection coatings, the wavelength selective transmission coatings or the wavelength selective reflection coatings of various kind, other than the dielectric multilayer, may be used instead of the dielectric multilayer 21.

Similarly, in the above-mentioned modifications, the cholesteric liquid crystal layer 22 is formed of three layers of the cholesteric liquid crystals 27A to 27C each of which has a different helical pitch. Instead, a film having a wavelength selectivity and a circular dichroism as reflection characteristics as with the cholesteric liquid crystal layer 22 may be substituted for the cholesteric liquid crystal layer 22. As such a film, for example, the cholesteric liquid crystal film described in the international publication number WO2011/078055 may be used.

(Embodiment)

Instead of the above mentioned configuration that the dielectric multilayer 21 and the cholesteric liquid crystal layer 22 are integrally formed together with the base plates 23 and 24, each of the dielectric multilayer 21 and the cholesteric liquid crystal layer 22 may be a member separated from each other to be able to change their relative positions.

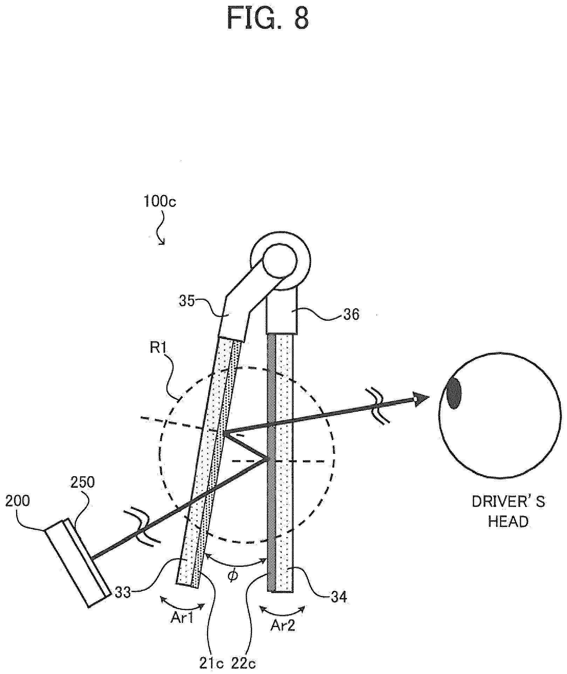

FIG. 8 is a diagram illustrating a configuration of a combiner 100c according to an embodiment of the inventions. As illustrated in FIG. 8, the combiner 100c according to the embodiment includes a dielectric multilayer 21c, a cholesteric liquid crystal layer 22c, transparent base plates 33, 34, and holding parts 35, 36. The dielectric multilayer 21c is formed on the side of the base plate 33 opposite to the side which the real image displaying light enters, and the cholesteric liquid crystal layer 22c is formed on the side of the base plate 34 which the real image displaying light enters. The base plates 33, 34 are formed as parallel flat plates.

The dielectric multilayer 21c and the base plate 33 are held by the holding part 35, and the cholesteric liquid crystal layer 22c and the base plate 34 are held by the holding part 36. The holding part 35 and the holding part 36 are attached in a manner rotatable around a common axis. Thus, the dielectric multilayer 21c and the base plate 33 held by the holding part 35 swing in the direction illustrated by the arrow Ar1, and the cholesteric liquid crystal layer 22c and the base plate 34 held by the holding part 36 swing in the direction illustrated by the arrow Ar2. Therefore, the angle $\varphi$ formed by the dielectric multilayer 21c and the cholesteric liquid crystal layer 22c maybe suitably changed.

It is not limited that the combiner 100c is configured such that both the dielectric multilayer 21c and the cholesteric liquid crystal layer 22c swing. The combiner 100c maybe configured such that one of the dielectric multilayer 21c and the cholesteric liquid crystal layer 22c is fixed and only the other of the dielectric multilayer 21c and the cholesteric liquid crystal layer 22c swings .

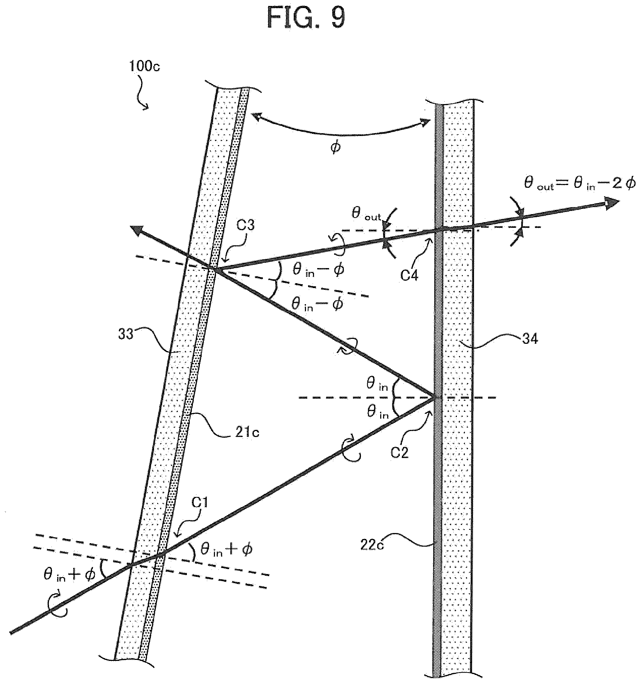

FIG. 9 is a diagram of the combiner 100c, illustrating a magnified view of the broken line area R1 in FIG. 8. The dielectric multilayer 21c illustrated in FIG. 9 has the characteristic of reflecting only light of the substantially the same wavelength as the light of R, G, or B, transmitting the light which is incident at the angle "$\theta_{in} + \varphi$", and reflecting a maximum of approximately 50% of the light which is incident at the angle "$\theta_{in} - \varphi$"

In the embodiment, as illustrated by the arrows C1 to C4 in FIG. 9, the dielectric multilayer 21c and the cholesteric liquid crystal layer 22c give predetermined optical effects to the real image displaying light to make the real image displaying light entering the combiner 100c from the real image display device 200 at the incident angle "$\theta_{in} + \varphi$" exit the combiner 100c at the exit angle "$\theta_{out}$". Thereafter, the real image display light is led to the driver's head while keeping approximately 50% light intensity.

Specifically, the right-handed circularly polarized light entering the combiner 100c from the real image display device 200 at the incident angle "$\theta_{in} + \varphi$" passes through the dielectric multilayer 21c by approximately 100% transmittance as illustrated by the arrow C1, and enters the cholesteric liquid crystal layer 22c. Thereafter, the light entering the cholesteric liquid crystal layer 22c at the incident angle $\theta_{in}$ is reflected at the refection angle $\theta_{in}$ by the cholesteric liquid crystal layer 22c by approximately 100% reflectivity as illustrated by the arrow C2. In this case, the light regularly reflected by the cholesteric liquid crystal layer 22c enters the dielectric multilayer 21c at the incident angle "$\theta_{in} - \varphi$", and the dielectric multilayer 21c reflects approximately 50% of the light at the reflection angle "$\theta_{in} - \varphi$" to convert the light into the left-handed circularly polarized light as indicated by the arrow C3. Then, the light reflected by the dielectric multilayer 21c passes through the cholesteric liquid crystal layer 22c as illustrated by the arrow C4 and exits the combiner 100c at the exit angle $\theta_{out}$ ($\theta_{out} = \theta_{in} - 2\varphi$).

As with the embodiment, the combiner 100c leads the signal light to the driver's head while keeping approximately 25% of the light intensity of the signal light entering the combiner 100c. Thus, according to the embodiment, the driver can virtually recognize the signal display while virtually recognizing the virtual image.

In one example regarding the embodiment, "10 ± 5[°]" is used as the angle φ, "40 ± 5[°]" is used as the incident angle "$\theta_{in} + \varphi$" ($\theta_{in}$ = 30 [°] in this case), and "10 ± 10 [°]" is used as the exit angle $\theta_{out}$.

Description will be given of the effect according the embodiment. The combiner 100c has such a configuration that the exit angle $\theta_{out}$ from the combiner 100c becomes "$\theta_{out} = \theta_{in} - 2\varphi$" and that the angle φ between the dielectric multilayer 21c and the cholesteric liquid crystal layer 22c can be changed. Therefore, the difference of the seating height of the drivers can be absorbed. Namely, according to the embodiment, even if the seating height of the driver changes, the light from the real image display device 200 can appropriately reach the head of the driver through the driver's manual change of the angle φ in accordance with the change of the seating height. Also, since the member (the flat parallel plate) formed by the dielectric multilayer 21c and the base plate 33 and the member (the flat parallel plate) formed by the cholesteric liquid crystal layer 22c and the base plate 34 can be made thin in the embodiment, the weight of the combiner 100c itself can be reduced.

(Seventh Modification)

The seventh modification is an example in which the arrangement of the dielectric multilayer 21c and the base plate 33 and the arrangement of the cholesteric liquid crystal layer 22c and the base plate 34 in the combiner 100c according to the embodiment are changed.

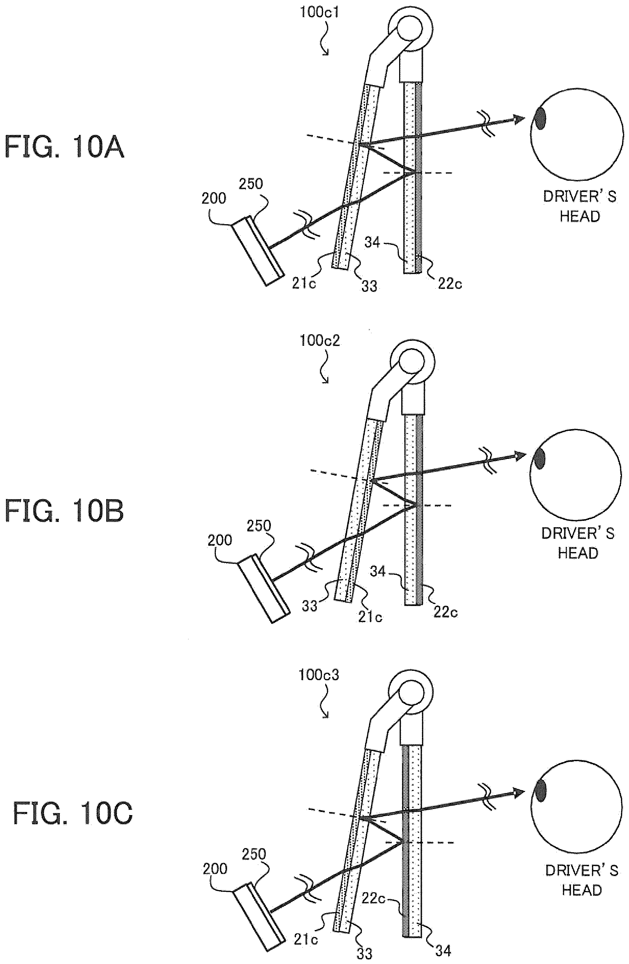

FIGS. 10A to 10C are diagrams illustrating configuration of combiners 100c1 to 100c3 according to the seventh modification. As illustrated in FIGS. 10A to 10C, each of the combiners 100c1 to 100c3 is different from the combiner 100c illustrated in FIG. 9 according to the embodiment in the positions on the base plate 33, 34 where the dielectric multilayer 21c and the cholesteric liquid crystal layer 22c are formed.

In the combiner 100c1 shown in FIG. 10A, the dielectric multilayer 21c is formed on the side of the base plate 33 which the real image displaying light enters, and the cholesteric liquid crystal layer 22c is formed on the side of the base plate 34 opposite to the side which the real image displaying light enters. In the combiner 100c2 illustrated in FIG. 10B, the dielectric multilayer 21c is formed on the side of the base plate 33 opposite to the side which the real image displaying light enters, and the cholesteric liquid crystal layer 22c is formed on the side of the base plate 34 opposite to the side which the real image displaying light enters. In the combiner 100c3 shown in FIG. 10C, the dielectric multilayer 21c is formed on the side of the base plate 33 which the real image displaying light enters, and the cholesteric liquid crystal layer 22c is formed on the side of the base plate 34 which the real image displaying light enters.

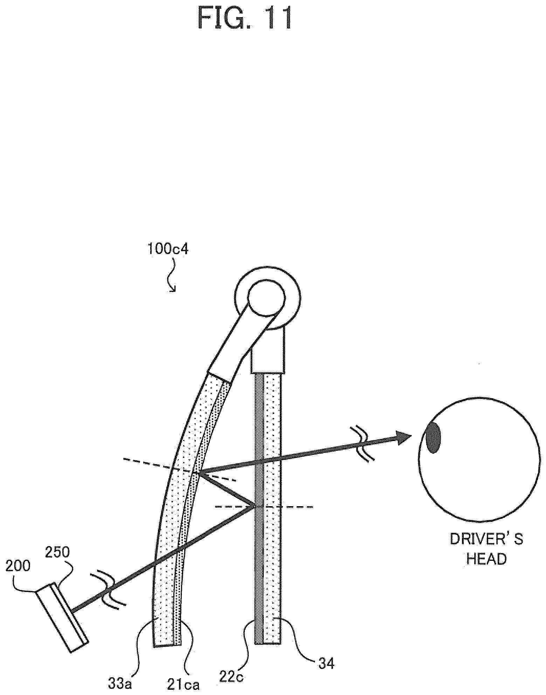

It is noted that each of the embodiment and seventh modification can be preferably applied in combination with the second modification. FIG. 11 is a diagram illustrating a configuration of a combiner 100c4 based on the embodiment and the second modification in combination. As illustrated in FIG. 11, the combiner 100c4 is different from the combiner 100c in that the dielectric multilayer 21ca having a gentle curvature shape (meniscus shape) is used instead of the dielectric multilayer 21c formed in the flat parallel plate . In case of using such a dielectric multilayer 21ca, the base plate 33a to which the dielectric multilayer 21ca is attached is formed into the shape having a gentle curvature.

According to the combiner 100c4, in addition to the optical effect of the above-described combiner 100c, it is possible to further give the lens effect to the real image displaying light. Therefore, according to the example illustrated in FIG. 11, the combiner 100c4 having a magnification can be realized, and the distance of the virtual image may be changed far or near.

(Eighth Modification)

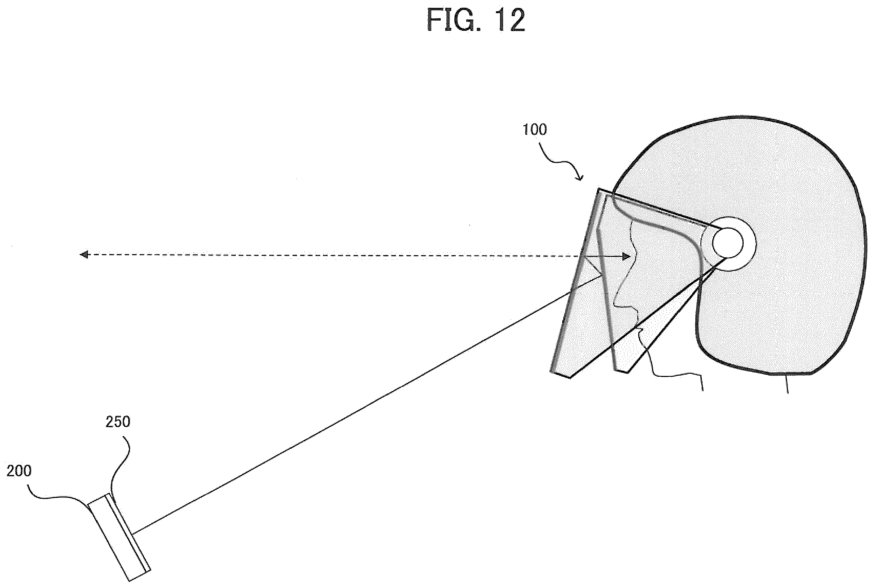

In the above-mentioned embodiment, the combiner 100 is provided around the ceiling of the vehicle. Instead, as illustrated in FIG. 12, the combiner 100 is configured to be a double visor helmet which the driver can wear.

In this case, for example, the HUD 300 is installed on a two-wheel vehicle and the real image display device 200 is provided on or around the dashboard or the meter of the two-wheel vehicle. In another example, the combiner 100 may be used for a wearable head-mounted display integrally including the real image display device 200 and the combiner 100. In these cases, preferably, the inclination angle φ of the dielectric multilayer 21 against the cholesteric liquid crystal layer 22 is determined so that the exit angle $\theta_{out}$ is set to 0°.

In this way, even the glass-type combiner 100 including the dielectric multilayer 21 and the cholesteric liquid crystal layer 22 enables the driver to visually recognize not only the virtual image based on the real image display light at a proper brightness but also the signal display based on the signal light entering the combiner 100 from above at the same incident angle as the real image display light. Additionally, it is possible to suppress the deterioration of the visibility due to the direct incidence of the real image display light to the driver's eyes.

(Ninth Modification)

In the modifications, the peak of the reflectivity of the dielectric multilayer 21 is determined to approximately 50%. However, the range of reflectivity of the dielectric multilayer 21 to which the present invention can be applied is not limited thereto. Instead, the peak of the reflectivity may be determined by experimental trials in consideration of the real visibility to a specific value other than 0% and 100%.

(Tenth Modification)

In the modifications, as an example of the present invention, the real image display device 200 emits the real image display light configured of RGB light having each wavelength 450nm, 532nm, 650nm. Instead, the real image display light may be configured of the light having any other wavelength. Even in this case, the dielectric multilayer 21 and the cholesteric liquid crystal layer 22 are configured to have the wavelength selectivity in accordance with the wavelength of the real image display light. Thereby, the combiner 100 can lead the background light having the same wavelength as the real image display light to the driver's eyes while letting the driver visually recognize the virtual image based on the real image display light with a proper brightness.

DESCRIPTION OF REFERENCE NUMBERS

[0087]

> 12, 23, 24, 33, 34 Base plate
> 21, 21a to 21c, 21ca Dielectric multilayer
> 22, 21b to 21c Cholesteric liquid crystal layer
> 35, 36 Holding part
> 100, 100a to 100c Combiner
> 200 Real image display device
> 250 Quarter wave plate film
> 300 HUD

**Claims**

1. A combiner as a virtual image generation device (100c, 100c1 to 100c4), visualizing a virtual image, the combiner comprising:

   a first optical element (21c, 21ca) on which circularly polarized real image display light for displaying an image is incident;
   a second optical element (22c) having circular dichroism which reflects the real image display light having passed through the first optical element (21c, 21ca) and which transmits the real image display light reflected by the second optical element (22c) and thereafter reflected by the first optical element (21c, 21ca); and
   a holding part (35, 36) rotatably holding at least one of the first optical element (21c, 21ca) and the second optical element (22c) such that an angle formed by a surface of the first optical element (21c, 21ca) and a surface of the second optical element (22c) can be changed,
   wherein the first optical element (21c, 21ca) has a wavelength selectivity to selectively reflect the real image display light and an incident angle dependency to change reflectivity depending on an incident angle, and
   wherein the surface of the first optical element (21c, 21ca) is angled with respect to the surface of the second optical element (22c) such that an incident angle at which the real image display light is first incident on the first optical element (21c, 21ca) is different from an incident angle at which the real image display light thereafter reflected by the second optical element (22c) is incident on the first optical element (21c, 21ca).

2. The combiner according to claim 1, wherein the first optical element has a characteristic of partly reflecting light having substantially the same wavelength as the real image display light in accordance with an incident angle of the light, and transmitting light having wavelength other than substantially the same wavelength as the real image display light.

3. The combiner according to claim 1 or 2, wherein the first optical element is formed into a serrate shape including multiple surfaces angled with respect to the surface of the second optical element.

4. The combiner according to any one of claims 1 to 3, wherein the first optical element has a curved surface giving a lens effect to the real image display light.

**5.** The combiner according to any one of claims 1 to 4, wherein the first optical element is a dielectric multilayer.

**6.** The combiner according to any one of claims 1 to 5, wherein the second optical element has a laminate structure of cholesteric liquid crystals (27A to 27C) having helical pitches corresponding to the wavelength of the real image display light.

## Patentansprüche

**1.** Kombinator als Gerät zur Erzeugung eines virtuellen Bildes (100c, 100c1 bis 100c4), das ein virtuelles Bild visualisiert, der Kombinator aufweisend:

ein erstes optisches Element (21c, 21ca), auf das zirkular polarisiertes Realbild-Anzeigelicht zur Anzeige eines Bildes einfällt;

ein zweites optisches Element (22c) mit zirkularem Dichroismus, das das Realbild-Anzeigelicht reflektiert, nachdem es durch das erste optische Element (21c, 21ca) hindurchgegangen ist, und das das Realbild-Anzeigelicht durchlässt, das von dem zweiten optischen Element (22c) reflektiert und danach von dem ersten optischen Element (21c, 21ca) reflektiert wird; und

ein Halteteil (35, 36), das mindestens eines von dem ersten optischen Element (21c, 21ca) und dem zweiten optischen Element (22c) drehbar hält, so dass ein durch eine Oberfläche des ersten optischen Elements (21c, 21ca) und eine Oberfläche des zweiten optischen Elements (22c) gebildeter Winkel verändert werden kann, wobei das erste optische Element (21c, 21ca) eine Wellenlängenselektivität aufweist, um das Realbild-Anzeigelicht selektiv zu reflektieren, und eine Einfallswinkelabhängigkeit, um die Reflektivität in Abhängigkeit von einem Einfallswinkel zu ändern, und

wobei die Oberfläche des ersten optischen Elements (21c, 21ca) in Bezug auf die Oberfläche des zweiten optischen Elements (22c) so abgewinkelt ist, dass ein Einfallswinkel, unter dem das Realbild-Anzeigelicht zuerst auf das erste optische Element (21c, 21ca) einfällt, von einem Einfallswinkel, unter dem das Realbild-Anzeigelicht auf das erste optische Element (21c, 21ca) einfällt, das danach von dem zweiten optischen Element (22c) reflektiert wird, verschieden ist.

**2.** Kombinator nach Anspruch 1,
wobei das erste optische Element eine Eigenschaft hat, Licht mit im Wesentlichen derselben Wellenlänge wie das Realbild-Anzeigelicht in Übereinstimmung mit einem Einfallswinkel des Lichts teilweise zu reflektieren und Licht mit einer anderen Wellenlänge als der im Wesentlichen gleichen Wellenlänge wie das Realbild-Anzeigelicht durchzulassen.

**3.** Kombinator nach Anspruch 1 oder 2,
wobei das erste optische Element zackenförmig ausgebildet ist und mehrere Oberflächen aufweist, die in Bezug auf die Oberfläche des zweiten optischen Elements abgewinkelt sind.

**4.** Kombinator nach einem der Ansprüche 1 bis 3,
wobei das erste optische Element eine gekrümmte Oberfläche aufweist, die einen Linseneffekt für das Realbild-Anzeigelicht erzeugt.

**5.** Kombinator nach einem der Ansprüche 1 bis 4,
wobei das erste optische Element eine dielektrische Mehrfachschicht ist.

**6.** Kombinator nach einem der Ansprüche 1 bis 5,
wobei das zweite optische Element eine Laminatstruktur aus cholesterischen Flüssigkristallen (27A bis 27C) mit spiralförmigen Steigungen aufweist, die der Wellenlänge des realen Bildanzeigelichts entsprechen.

## Revendications

**1.** Combineur en tant que dispositif de génération d'image virtuelle (100c, 100c1 à 100c4), visualisant une image virtuelle, le combineur comprenant :

un premier élément optique (21c, 21ca) sur lequel la lumière d'affichage d'image réelle polarisée circulairement pour afficher une image est incidente ;

un second élément optique (22c) présentant un dichroïsme circulaire qui réfléchit la lumière d'affichage d'image réelle ayant traversé le premier élément optique (21c, 21ca) et qui transmet la lumière d'affichage d'image réelle réfléchie par le second élément optique (22c) et ensuite réfléchie par le premier élément optique (21c, 21ca) ; et

une partie de maintien (35, 36) maintenant de manière rotative au moins l'un du premier élément optique (21c, 21ca) et du second élément optique (22c) de sorte qu'un angle formé par une surface du premier élément optique (21c, 21ca) et une surface du second élément optique (22c) peut être modifié,

dans lequel le premier élément optique (21c, 21ca) a une sélectivité de longueur d'onde pour réfléchir sélectivement la lumière d'affichage d'image réelle et une dépendance d'angle d'incidence pour changer la réflectivité en fonction d'un angle d'incidence, et

dans lequel la surface du premier élément optique (21c, 21ca) est inclinée par rapport à la surface du second élément optique (22c) de sorte qu'un angle d'incidence auquel la lumière d'affichage d'image réelle est d'abord incidente sur le premier élément optique (21c, 21ca) est différent d'un angle d'incidence auquel la lumière d'affichage d'image réelle ensuite réfléchie par le second élément optique (22c) est incidente sur le premier élément optique (21c, 21ca).

2. Combineur selon la revendication 1, dans lequel le premier élément optique a une caractéristique de réflexion partielle de la lumière ayant sensiblement la même longueur d'onde que la lumière d'affichage d'image réelle en fonction d'un angle d'incidence de la lumière, et de transmission de la lumière ayant une longueur d'onde autre que sensiblement la même longueur d'onde que la lumière d'affichage d'image réelle.

3. Combineur selon la revendication 1 ou 2, dans lequel le premier élément optique est formé en une forme dentelée comprenant de multiples surfaces inclinées par rapport à la surface du second élément optique.

4. Combineur selon l'une quelconque des revendications 1 à 3, dans lequel le premier élément optique présente une surface incurvée donnant un effet de lentille à la lumière d'affichage de l'image réelle.

5. Combineur selon l'une quelconque des revendications 1 à 4, dans lequel le premier élément optique est un multicouche diélectrique.

6. Combineur selon l'une quelconque des revendications 1 à 5, dans lequel le deuxième élément optique présente une structure stratifiée de cristaux liquides cholestériques (27A à 27C) présentant des pas hélicoïdaux correspondant à la longueur d'onde de la lumière d'affichage de l'image réelle.

# FIG. 1

300

200

100

HORIZONTAL VIEWING
ANGLE

VERTICAL VIEWING
ANGLE

100

200

FIG. 2

DRIVER'S HEAD

# FIG. 3A

REFLECTIVITY [%]

INCIDENT LIGHT WAVELENGTH[nm]

# FIG. 3B

REFLECTIVITY [%]

G21

G21'

$\beta$ (19.8)

$\alpha$ (40.9)

INCIDENT ANGLE[° ]

(b)

# FIG. 4

SIGNAL LIGHT

$\theta_{in}$

$\theta_{in}'$

B5

$\beta'$

B6

$\theta_{in}$

$\theta_{in}'$

$\theta_{in}$

100

$\beta'$

$\theta_{out}'$

$\theta_{out}$

DRIVER'S
HEAD

$\theta_{in}'$

$\theta_{in}'$

$\alpha'$

$\theta_{in}'$

$\phi$

22

$\theta_{in}$

REAL IMAGE
DISPLAY LIGHT

23

21

24

# FIG. 5

## FIG. 6

# FIG. 7

# FIG. 8

FIG. 9

FIG. 10A

100c1

200    250

34

21c    33    22c

DRIVER'S
HEAD

FIG. 10B

100c2

200    250

34

33    21c    22c

DRIVER'S
HEAD

FIG. 10C

100c3

200    250

22c

21c    33    34

DRIVER'S
HEAD

# FIG. 11

100c4

200  250

33a  21ca  22c  34

DRIVER'S
HEAD

FIG. 12

EP 3 086 159 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6270716 A
- JP 2002052953 A
- JP 2905486 B
- US 6144439 A
- US 6075651 A1
- WO 2011078055 A